(19) Europäisches Patentamt
European Patent Office
Office européen des brevets

(11) **EP 3 425 861 A1**

(12) **EUROPEAN PATENT APPLICATION**

(43) Date of publication:
**09.01.2019 Bulletin 2019/02**

(51) Int Cl.:
**H04L 12/751** (2013.01)    **H04W 40/24** (2009.01)

(21) Application number: **17305861.1**

(22) Date of filing: **03.07.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicants:
• **Mitsubishi Electric R&D Centre Europe B.V.**
  **1119 NS  Schiphol Rijk Amsterdam (NL)**
  Designated Contracting States:
  **FR**
• **Mitsubishi Electric Corporation**
  **Tokyo 100-8310 (JP)**
  Designated Contracting States:
  **AL AT BE BG CH CY CZ DE DK EE ES FI GB GR HR HU IE IS IT LI LT LU LV MC MK MT NL NO PL PT RO RS SE SI SK SM TR**

(72) Inventors:
• **KHANFOUCI, Mourad**
  **35708 Rennes Cedex 7 (FR)**
• **BRUNEL, Loïc**
  **35708 Rennes Cedex 7 (FR)**

(74) Representative: **Cabinet Plasseraud**
  **66, rue de la Chaussée d'Antin**
  **75440 Paris Cedex 09 (FR)**

(54) **IMPROVED ROUTING IN AN HETEROGENEOUS IOT NETWORK**

(57)    The invention related to a method for defining data routing between IoT devices forming nodes of a network, the method comprising the steps of:
- for each node of the network, obtaining measurements (S1) of link quality between the node and one or several neighbor nodes of that node, and comparing said measurements to a threshold so as to label said node as a most influent node of the network,
- determining a graph (S2) representing a hierarchy in said nodes from the most influent nodes, as central nodes, to the less influent nodes, as edge nodes, and defining a data routing (S5) in the network maximizing a betweeness centrality (S3) in the graph.

FIG. 3b

EP 3 425 861 A1

**Description**

The invention relates to wireless networks.

As for an example, in industrial automation applications, a wireless sensor network can monitor physical quantity. In that type of network, sensors transmit their measurements to a concentrator of the wireless sensor network. The concentrator processes measurements data and/or transmit these data to a data center. The low latency of this data transmission is a key requirement for industrial automation communications. This requirement is a challenge for ultra-dense and heterogeneous wireless sensor networks.

Hereafter, a so-called "heterogeneous" wireless sensor network corresponds to a wireless sensor network having different power and coverage capabilities, and more particularly is directly linked to a "design of interference aware routing scheme".

An interference aware routing for an ultra-dense wireless sensor network (abbreviated as "WSN" hereafter) defines a set of techniques for collecting information and/or data from a set of source nodes and transmitting such information and/or data to a "sink node" (corresponding to data collector or concentrator node).

The state of the art interference aware routing for the industrial wireless sensor networks (for example ZigBee or the IEEE 802.15.4 standard suite) is based on the Adaptive On Demand Distance Vector (AODV) routing algorithm.

The AODV routing algorithm minimizes data collection latency from the source to the concentrator in two steps:

> 1- Identifying the shortest path from the source to the concentrator by flooding the network with route request messages ("RREQ" messages). These messages are periodically transmitted from the concentrator to the nodes of the WSN ; and

> 2- A route finding and consolidation step:

> - the source responds to RREQ messages (RREQ packets) with route request response (RREP) to the closest node in its neighborhood ;

> - each node along the shortest path from the source to the concentrator forwards the RREP (RREP packets) to the closest and the least interfered one-hop neighbor ; and

> - each node along that shortest path updates the routing tables accordingly ;

> the transmission latency from the node to this neighbor being related to the signal to noise and interference ratio *SINR* as $\tau = D$ / log 2(1 + *SINR)* where D is the packet length and log2(1+SINR) corresponds to the capacity of the link.

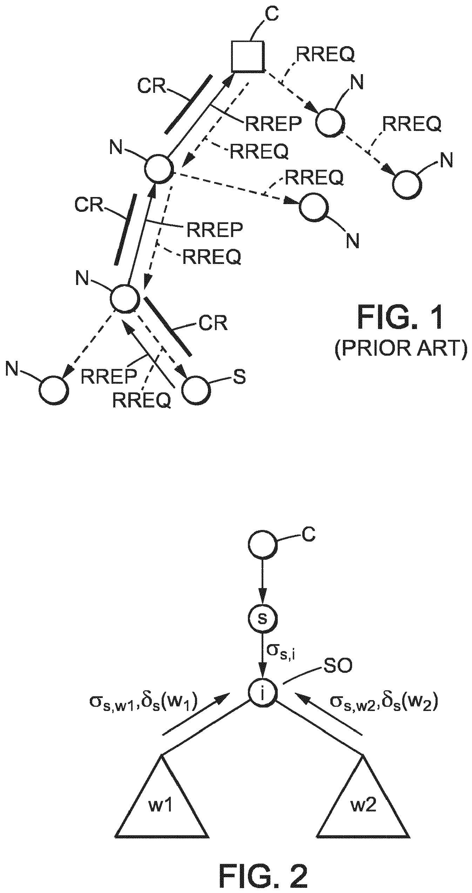

The AODV routing algorithm is illustrated in figure 1 which shows a first step of sending RREQ messages from the concentrator C to the nodes N (dashed line arrows), then the responses from the nodes (solid line arrows) and finally the second step of consolidating the route CR (in bold line) from the concentrator to the source node S.

The main advantage of using the AODV technique is its flexibility. AODV algorithm builds routes only when needed, between the source S and the concentrator C.

However, an implementation following the AODV algorithm has several drawbacks.

It floods the network with RREQ packets that add important communication overhead on ultra-dense and large WSN. Moreover, the selection of the concentrator relies on standard network planning tools that are too complex, not scalable and not resilient. The network planning should be reiterated for all the network nodes if a topology change is detected.

The implementation according to the AODV approach is therefore poorly adapted to an ultra-dense and heterogeneous wireless sensor network that is deployed for industrial automation. It may be not efficient (owing to the RREQ messages flooding), nor scalable, nor resilient can. It can be further complex to implement since the AODV algorithm does not provide means for an optimal selection of the concentrator.

The present invention aims to improve the situation.

To that end, it is proposed according to a first aspect of the invention, a method implemented by computer means for defining data routing between IoT (for "Internet of Things") devices forming nodes of a network, the method comprising the steps of:

> - for each node of the network, obtaining measurements of link quality between the node and one or several neighbor nodes of that node, and comparing said measurements to a threshold so as to label said node as a most influent node of the network,

> - determining a graph representing a hierarchy in said nodes from the most influent nodes, as central nodes, to the less influent nodes, as edge nodes, and defining a data routing in the network maximizing a betweeness centrality in the graph.

Therefore, the invention proposes an efficient solution for routing optimization in order to minimize data collection latency without using complex network planning tools. The invention borrows from the technique of social networks analysis the calculation of betweeness centrality, in particular to define at best a concentrator for example among other nodes of the network. It has been observed in social networks that the higher the number of individuals involved in a social graph, the better the performance of the network. In the case of the invention, the higher the number of communicating objects in an IoT network and the more the technique borrowed from social networks analysis is efficient. Typically, the invention is highly efficient for a dense or an ultra-dense IoT network (comprising for example network densities above 100 nodes (such as sensors) per km$^2$).

In one possible embodiment, said nodes of the network are operating according to different types of operation, and the nodes of the network are distributed in at least a first and a second distinct tier, nodes of a same tier having a same type of operation (same telecommunication protocol and/or same function, or other), the nodes of each of said tiers being connected to a gateway between said first and second tiers. The aforesaid graph is determined for each of said first and second tiers.

For example, the difference of operation between nodes of different tiers in the network can be defined by different protocol layers (Zigbee, WiSUN protocols on the one hand and Wifi on the other hand, for example), and/or different transmission properties. The gateway can thus use and interpret all of these different protocol layers and/or transmission properties.

In a first embodiment, the gateway:

- calculates a graph for each tier based on said link quality measurements,

- calculates a betweeness centrality score for each node of each graph between the nodes of each network tier,

- determines, stores and uses a table of paths for routing data from one node to another in each tier based on betweeness centrality scores of nodes in that tier such that the sum of the tier nodes betweeness centralities is maximized for each path.

In that first embodiment, the gateway can designate one concentrator node per tier as having the highest betweeness centrality score among the nodes of its tier.

In that first embodiment, central paths, defined in the aforesaid table, can advantageously minimize data collection latency for each tier of the network.

In a second embodiment, the gateway determines graphs for all the tiers of the network and calculates betweeness centrality scores for every node in each tier in a first step, and one concentrator node is designated in each tier to route data between nodes of its tier, said concentrator being defined as the most central node in its tier. In a second step, the concentrator designates repeatedly the most central node in its tier to become eventually the new concentrator in its tier.

In that second embodiment, in the aforesaid second step, each current concentrator in a tier can designate one next concentrator node to replace the current concentrator in that tier, as having the highest betweeness centrality score among the nodes of that tier.

In a third embodiment, the gateway obtains the graph of each tier of the network and transmits graph information to each node of each tier for calculation of betweeness centrality scores performed by each node, and for designating one concentrator node in each tier to route data between nodes of its tier, said concentrator being defined as the most central node in its tier. Nodes of a same tier designate repeatedly the most central node in their tier to become eventually the new concentrator in their tier.

In that third embodiment, betweeness centrality scores can be used to determine the concentrator nodes of each tier. The nodes can exchange their centrality scores in order to calculate cooperatively the maximum of the centrality scores, a node having that maximum of the centrality scores being defined as the concentrator in its tier.

In the second or third embodiment, each concentrator can determine, store and use a table of paths for routing data from one node to another in its tier based on betweeness centrality scores of nodes in that tier such that the sum of the tier nodes betweeness centralities is maximized for each path.

Moreover, a betweeness centrality score can be calculated for each current node of the network by:

A) for each one-hop first neighbor of said current node, counting a first number of links, having a measured quality higher than said threshold, that said current node neighbor has with its one-hop first neighbors,

B) counting a second number of links, having a measured quality higher than said threshold, that said current node has with its one-hop first neighbors, weighted for each neighbor by a value corresponding to the first number of that neighbor,

C) Repeating recursively steps A) and B) and summing said first and second numbers to determine betweeness centrality scores for each node of the network as a current node.

Steps A) to C) can be performed following a Brandes algorithm type implementation, detailed in the specification hereafter.

The present invention aims further at a computer program product, comprising instructions for performing the method defined above, when run by a processor.

The present invention aims also at a node of a network comprising a computer circuit performing the method defined above.

The present invention aims also at a node configured to act as a gateway between at least two tiers of the network, as explained above.

The invention proposes therefore to define, like in social networks, the influence (based on "centrality" as explained below) of the nodes on the network (or "tiers" of that network as explained below), according to measurements provided by the nodes. The concentrator is set as the most "influential" node (like in social graphs) in the network (or in its tier) and the routing is defined by construction of paths along which data are transmitted to the concentrator with a maximum cumulative "centrality". These paths provide, with highest probability, the minimum transmission latency to a coordinator of the network which can be a gateway between tiers.

The routing and the choice of the concentrator, that minimizes data collection latency of the wireless sensor network (WSN), can be defined as follows:

- the nodes of the WSN measure the neighboring nodes (through SNIR calculation or any other link quality parameter) and transmit these measurements to a gateway which constructs a graph (like a social graph) for the nodes of the WSN (or a graph per tier of the network if the WSN is heterogeneous) ;
- the concentrator node C is selected as the most central and/or influential node in the WSN based on that network graph ;
- routing may be defined then by the paths of the network which maximizes the sum of the centralities along them.

The paths that maximize the sum of the centralities provide the lowest data collection latency.

The present invention is illustrated by way of example, and not by way of limitation, in the figures of the accompanying drawings, in which like reference numerals refer to similar elements and in which:

- Figure 1 illustrates an AODV routing algorithm according to the prior art;
- Figure 2 illustrates the principle of the Brandes algorithm for the calculation of betweeness centrality;
- Figure 3a illustrates an architecture of a heterogeneous network where an implementation of the method of the invention, based on centrality, is performed;
- Figure 3b illustrates a example of steps of the aforesaid method;
- Figures 4 to 6 show examples of implementation of the invention, respectively according to a first, a second and a third embodiment;
- Figure 7 illustrates very schematically a node according to the invention (which can be more particularly a gateway having for example a plurality of communication interfaces COM2 to communicate with nodes of several tiers in the network).

Hereafter, the case of a heterogeneous wireless sensor network with multiple tiers is described, as an optional and non-limiting example of embodiment.

The wording "multiple tiers" aims at the fact that multiple wireless sensors may implement different technologies with specific physical, MAC and transport layers, from a tier of the WSN to another. Therefore, it is possible that, in one and a same tier, a same technology of the sensor nodes is involved. From a tier to another one, within the network, a gateway can perform inter-tier protocol translations, and other operations described below as examples. Therefore, the gateway in a heterogeneous network can have the role of linking a plurality of tiers.

"Centrality metrics" (defined below) are used to define the concentrator node to be chosen among the nodes of the tier and routing can be defined on the basis of minimizing an average data collection delay in the tier.

More particularly, the concentrator node is defined as being the node that receives packets from the heterogeneous wireless sensor network nodes, as the most central node in the WSN.

A routing strategy for the nodes of the heterogeneous wireless sensor networks can be defined roughly as a routing to the most central neighbor among its one-hop neighbors.

The centrality of a node of the wireless sensor network is defined as the average contribution of the node to the paths of the information packets in the network. The network is represented as a communication graph corresponding to a graph where each node represents a wireless sensor and each edge connecting two nodes represents the possibility of the two involved wireless sensors to communicate.

The edges can be un-weighted. In this case, all the communication possibilities between the node and its neighbors are equivalent (or weighted otherwise) and the latency of the communication is associated to the edge. For example, if a node s is transmitting its data packet to its concentrator t, the path from s to t is defined as the sequence of the nodes relaying data packet from of the source s towards the concentrator t.

The path metric is the sum of the weights of the edges connecting the nodes of a path. For the un-weighted graph, the metric of a path is finally the number of hops in that path from the source s to the concentrator t. If the graph is alternatively weighted with the communication latency, the path metric is the sum of the communication latencies along the path. The shortest path is the path with the lowest path metric, having the minimum number of hops from the source to the concentrator or having the lowest communication latency from the concentrator.

The betweeness centrality $C_B(i)$, defined also as the centrality score of a node i of the network, other than s, is given by the sum of its contributions to the shortest paths from all the possible nodes s towards a the fixed concentrator t, as follows:

$$C_B(i) = \sum_s \frac{\sigma_s(i)}{\sigma_s}$$

where parameter $\sigma_s$ is the number of shortest paths from

$s$ to the concentrator $t$, and parameter $\sigma_s(i)$ is the number of shortest paths from $s$ that are passing by the node $i$ towards the concentrator $t$.

If the concentrator is not known, $\sigma_{s,t}$ and $\sigma_{s,t}(i)$ are defined as the number of shortest paths from the node $s$ to a node $t$, as an average over a random choice of concentrators $t$, as follows:

$$C_B(i) = \sum_{s \neq i} \sum_{t \neq i; s \neq t} \frac{\sigma_{s,t}(i)}{\sigma_{s,t}}$$

The centrality scores are calculated based on a graph representation of the heterogeneous wireless sensor network. This graph is built from radio measurements of each node of the WSN that are performed for example during the topology formation phase of the wireless sensor network.

Several possible definitions of the graph and uses of the betweeness centrality as a main centrality score for the routing and concentrator definition are proposed below.

The centrality scores may be calculated either by performing exact count of the shortest paths in the graph representation of each tier of the heterogeneous wireless sensor network and then summing the different path dependencies given by: $\delta_{s,t}(i) = \dfrac{\sigma_{s,t}(i)}{\sigma_{s,t}}$, this parameter being calculated for all possible choices of concentrator $t$ and for all the nodes $s$ different from $t$.

The centrality scores are calculated also by means of a two steps approximation (called hereafter the "Brandes algorithm") performed by:

- calculating the betweeness centrality of a node $i$ and propagating the accumulated path dependencies $\delta_s(i)$ defined as: $\delta_s(i) = \sum_t \dfrac{\sigma_{s,t}(i)}{\sigma_{s,t}}$, corresponding to an average for all possible choices of concentrators $t$.

- and calculating the accumulated path dependencies recursively as

$$\delta_s(i) = \sum_{w; i \in P_s(w)} \frac{\sigma_{s,i}}{\sigma_{s,w}} \left(1 + \delta_s(w)\right)$$

where $\sigma_{s,i}$ is the number of shortest paths from the node $i$ to the node $s$ and parameter $P_s(w)$ is the predecessor set of the shortest path from the node $w$ toward the node $s$ of the network.

An example of that algorithm is described in:

"A Faster Algorithm for Betweeness Centrality", Brandes, J. of Math. Sociology, Vol. 25, 2, pages 163-117. 2001.

Figure 2 illustrates the propagation of the accumulated path dependencies in the network proposing thus to approximate the graph of the WSN as a tree. Step S0 shows more particularly the calculation of the accumulated path dependencies $\delta_s(i)$ between two connected nodes $i$ and $s$. Node $s$ can be connected further to a concentrator $C$ in the shown example. Current node $i$ is connected through two paths in the given example respectively with downstream nodes $w1$ and $w2$.

In this example, $\delta_s(i)$ can be calculated as follows:

$$\delta_s(i) = \frac{\sigma_{s,i}}{\sigma_{s,w1}} \left(1 + \delta_s(w1)\right) + \frac{\sigma_{s,i}}{\sigma_{s,w2}} \left(1 + \delta_s(w2)\right)$$

where $\sigma_{s,i}$ is the number of shortest paths from a node $i$ to a node $s$, and $\delta_s(w1)$ and $\delta_s(w2)$ correspond to accumulated path dependencies between node $i$ and respectively downstream nodes $w1$ and $w2$. These accumulated path dependencies $\delta_s(w1)$ and $\delta_s(w2)$ can have been calculated previously according to a recursive process.

The final betweeness centrality for a node $i$ is given as $C_B(i) = \sum_s \delta_s(i)$

The number of shortest paths $\sigma_{s,i}$ and the predecessor sets $P_s(w)$ can be calculated by using the "breadth first search" (BFS) technique and/or the Djikstra algorithm.

Depending on the path definition, different betweeness centrality metrics can be considered:

- a path betweeness centrality where hops count (the number of edges in the path) is the metric used for characterizing the paths in the graph of the wireless sensor network (or a tier of that network). The centrality of a node is related to the average hops count to the concentrator where all the hops are considered equally; or
- a weighted path betweeness where the latency of the paths towards the concentrator is used for characterizing the paths in the graph of the wireless sensor networks. The centrality of the node is related to the average transmission latency to the concentrator node.

The concentrator node can be chosen as the most central node in the wireless sensor network.

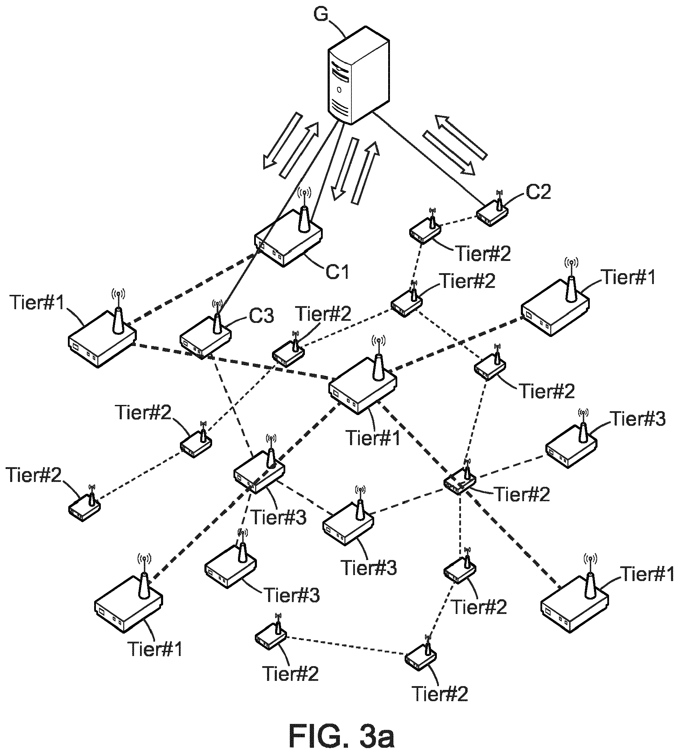

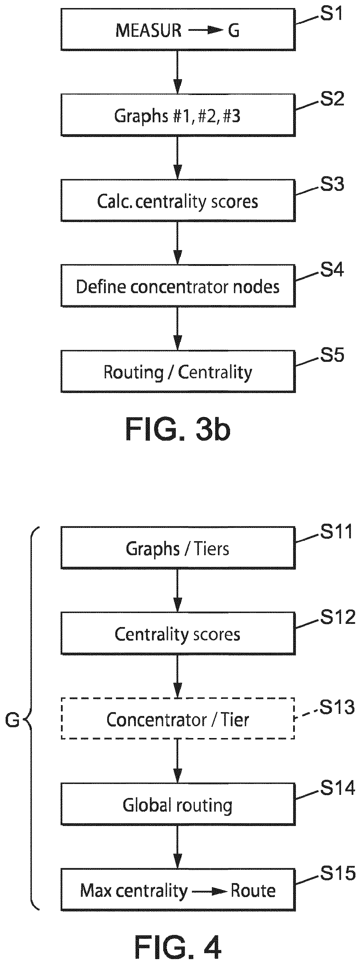

Figures 3a and 3b summarize the steps presented above. The details of the different steps are given hereafter.

The concentrator nodes are three in the example of figure 3a and labeled C1, C2, C3. Each concentrator C1, C2, C3 is connected to nodes of a same tier, respectively Tier#1, Tier#2, Tier#3. The different concentrators C1, C2, C3 are connected to a heterogeneous IOT network gateway G that performs inter-tier protocol translation, general radio coordination and various tasks for the optimization of the heterogeneous IOT network. Figure 3b illustrates the steps proposed for the minimization of the average transmission latency in the IOT network. The details of the steps are given in the following:

- S1: The gateway G receives measurements from the different tiers of the heterogeneous wireless sensor network. Initially, it is assumed that the concentrators of the different tiers of the network are known. For example they are chosen randomly from the nodes of each different tier. The following options are possible for defining measurements to be transmitted to the gateway G. The options may be considered independently or combined as option (a) and/or option (b) and/or option (c) etc.

    a. Each node of each tier of the heterogeneous wireless sensor networks transmits measurements to its concentrator about the neighboring nodes from its own tier. These measurements can be for example, power measurements, SINR measurements defined as the quality of the power measurement with respect to the received power from the different neighbors of all the other nodes of the tier or the latency of the communication between the node and the neighboring nodes. In another variant this latency is calculated directly at the gateway G.

    b. Each node of each tier of the heterogeneous wireless sensor networks transmits measurements that are performed during an active scan phase that is performed periodically by the nodes in association/re-association phases of the WSN network. In an active scanning phase, the nodes of the network are broadcasting periodically beacon request commands and capturing the corresponding beacon sub-frames that are transmitted by the tier concentrator. In this case, the nodes are transmitting power measurements about their neighboring nodes and regarding their link to the concentrator.

- S2: The centrality scores are calculated by the gateway. The measurements are used for building a graph representation of the nodes of the heterogeneous wireless sensor network. The graph represents each tier independently. Then, centrality scores are calculated either by a direct count of the shortest paths in the network or by using the Brandes algorithm. The following options are then possible for the calculation of the betweeness centralities:

    a. The centrality scores are calculated from a non-weighted graph without taking into account the latency of the transmission between the nodes of the graph. The centrality according to this option describes the path diversity of the node, corresponding to the number of paths the node is contributing too. The centrality is calculated through the Brandes algorithm where the path search step uses so-called "breadth first search" (BFS). The path metric considered for this centrality is the hops count.

    b. The centrality scores are calculated from a weighted graph that takes into account the latency of the transmission between the nodes of the graph. The centrality of this option is describing the minimum latency path diversity of the node, corresponding to the number of paths with minimum latency the node is contributing to. The centrality is calculated through the Brandes algorithm where the path search step can use for example the Djikstra search algorithm. The path metric considered for this centrality is the minimum transmission latency.

    c. The centrality scores are calculated from weighted graphs taking into account the capacity of the transmission between the nodes. The capacity between the nodes $i$ and $j$ is defined as a function of the signal to interference ratio between the nodes. For example, the capacity can be given as $c_{i,j} = \log_2(1+SINR(i,j))$ where $SINR(i,j)$ is the signal to interference and noise ratio between the nodes $I$ and $j$. The centrality is calculated through Djikstra shortest path search that finds the paths traversing the nodes with the maximum transmission capacity.

- S3: The centrality scores are transmitted to the nodes of each tier of the heterogeneous wireless sensor network in order to be used for the definition of the concentrator nodes and/or for routing.

    a. The gateway can determine from the centrality scores of the nodes of each tier, the concentrator node of the tier and the routing path that optimizes the sum centralities. The gateway can change the routing tables of the nodes in order to set the calculated routing path in the tier and signal to the nodes of the tier the identification of the concentrator of each tier. The gateway decides then to relocate the concentrator if topology change is detected in the tier.

    b. Alternatively, the centrality scores can be transmitted to the concentrator node of each network tier. The initial concentrators are chosen randomly and each concentrator is unique in each tier. In this case, the routing and the concentrator definition is performed in the current concentrator of the network tier.

c. The gateway uses the measurements of the nodes of each tier of the WSN to cluster the tiers into a set of clusters of $N_i$ nodes. The gateway determines the most central node in each cluster and transmits the set of the centralities in each cluster to the most central node in the cluster.

- S4: The centrality scores are used to define or to update the concentrator nodes of the tiers of the network. The concentrator nodes are defined as the nodes with the highest centrality scores in each tier of the heterogeneous network.

a. Concentrator nodes can be set by the gateway based on the centrality scores defined in step S2 and considering the different graph definitions of the step S1. The concentrator nodes are defined as the nodes of a tier with the maximum centrality score in the graph representing the tier of the ultra-dense heterogeneous network.

b. Concentrator nodes can be set and/or updated by the current concentrator nodes as the following: initially a concentrator node is chosen randomly in each tier of the network at the gateway. Then, the gateway transmits the centrality scores of the other nodes of the tier of the WSN to the concentrator node. The concentrator is updated if its centrality is lower than the most central node in the tier.

i. For example, the current concentrator node is calculating periodically the maximum of centralities of the nodes in the network tier of the WSN. If its current centrality is lower than the maximum of the calculated maximum, the current concentrator is triggering reallocation of the concentrator node to the most central node in the tier.

ii. In another option, each tier of the WSN is clustered at the gateway and the most central node in each cluster is determined. The cluster centers determine cooperatively their maximum centrality and the concentrator node of the tier is determined as the most central cluster center. The cooperative determination of the maximum of the centralities is done with a consensus averaging based algorithm as shown in option S4-(c) below.

c. Concentrator nodes are defined and/or updated cooperatively by the nodes of each tier of the wireless sensor network. In this case the nodes exchange their centrality scores in order to calculate cooperatively the maximum of the centrality scores. A node decides to act as a concentrator if its centrality is close to the calculated maximum centrality of the tier of the WSN. The following options are possible for cooperative calculation of the maximum of the centrality scores :

i. The maximum of the centralities is approximated as geometric mean of the centralities as $m_x = \left( \sum_{i=1}^{N} C_B(i)^P \right)^{1/P}$. The parameter $P$ is set by the gateway to a very high value (example, $P=100$) and $N$ is the number of the nodes in the tier. The nodes of the tier exchange their centralities as in the so-called consensus averaging algorithm, the average of the $P$-th $N$ power of their centralities, i.e. $m_0 = 1/N \sum_{i=1}^{N} C_B(i)^P$ is calculated after the convergence of the consensus averaging. The maximum of the centralities is calculated as $m_x = (Nm_0)^{1/P}$.
ii. Alternatively, each node of the tier receives the centralities of the neighboring nodes and stores the maximum among the received nodes including its own centrality. Each node transmits this maximum and listens to the neighboring nodes. The procedure is iterated until low variation in the stored value by each node is observed and the stored values are close to each other and to the maximum centrality value.

- S5: The centrality scores are used to route the packets of each node of the WSN tier with the objective to maximize of the centrality of the path. This routing provides paths minimizing the average data collection latency with a high probability.

a. The gateway can calculate paths that are maximizing the sum of the centralities in the graph of each tier of the WSN. These paths are stored in the gateway as a global routing table for the WSN tier and transmitted to the nodes of the path when needed. For example, if the node $s$ is requested to transmit its data to the concentrator, the gateway configure all the routing tables of the nodes of the path toward the concentrator to route the data packet to the neighbor that maximizes the sum of the centralities of the nodes.
b. The routing can be performed at the concentrator node level where the routing table is stored at the concentrator node and the routes are calculated per tier of the WSN.

i. The concentrator nodes can obtain the paths that maximize the sum of the centralities of the along the concentrator as follows:

- concentrator node tests first if there is a need for concentrator re-allocation (typically if the concentrator node is not the most central node in the tier), and
- the concentrator nodes calculate the routing path that maximizes the sum of the centralities from the nodes of the tier towards the allocated concentrator.

ii. In another option, the tier of the WSN is clustered by the gateway. The gateway determines the most central node in each cluster. The concentrator (corresponding to the cluster center with the maximum centrality) stores the routing table of the cluster centers. The cluster centers stores local routing tables of each cluster. Thus, the routing in this option is more dynamic and the routing tables are stored in the concentrator and cluster centers. This approach can be well adapted to cluster tree routing usually used in ZigBee networks and reduce complexity for the gateway. One main difference with the Zigbee cluster tree routing is the use of the betweeness centrality metric for the definition of the cluster tree structure.

c. The nodes of the WSN are storing routing table where each neighbor of the node $i$ is characterized by the value of its betweeness centrality in the network. Each node of the WSN routes its information packets to the most central node among its one-hop neighbors, that information being stored in the routing table of the node. This flat routing optimizes the latency of the transmission to the concentrator of each tier with a high probability.

Depending on how the concentrator selection and/or update is/are performed with the interference aware routing, three embodiments are considered below.

In first embodiment corresponds to the aforesaid "fully centralized" embodiment where the gateway calculates exactly the betweeness centrality of the tiers in the WSN. The gateway selects the concentrator node for each network tier, based on this betweeness centrality scores. The gateway performs a global, centralized routing of the data in each WSN tier. The routing considered in this first embodiment finds the paths with the maximum sum centralities in the graph of each WSN tier. The general scheme of the first embodiment is given in figure 4.

In step S11, the gateway obtains the graph of each tier by any means as explained above. In step S12, the gateway calculates the centrality scores. In step S13, the gateway determines and/or updates the concentrator nodes for each tier. In step S14, the gateway performs global routing to the concentrators and in step S15, centrality scores can be used to route packets of each node of the network.

More particularly, in step S14, the centrality scores are used to define or to update the concentrator nodes of the tiers of the network. The concentrator nodes are defined as the nodes with the highest centrality scores in each tier of the heterogeneous network. Concentrator nodes can be set by the gateway based on the centrality scores defined in step S12 and considering the different graph definitions of step S11. A concentrator node can be defined as the node of a tier having the maximum centrality score in the graph representing the tier of the ultra-dense heterogeneous network.

Then, for carrying out step S15, the centrality scores are used to route the packets of each node of the WSN such that the routing paths are such as the sum of the node centralities is maximized. The gateway can calculate these routing paths for each tier of the network. These paths are stored in the gateway as a global routing table for the WSN tier. In this first embodiment, the most central paths minimize also data collection latency for each tier of the WSN.

Finally, the gateway implements in this embodiment all the steps until the definition of the paths for routing packets in step S 15. The definition of the concentrators in each tier can be thus optional since the routing tables in each tier is stored and used by the gateway without any help from any node, nor any concentrator node in particular, of the network. This explains thus why step S 13 can be optional (and is therefore illustrated in dashed lines on figure 4).

The main advantage of this first embodiment is its near optimum performance. This optimality is due to the exact calculation of the centrality scores. This embodiment is well suited for a static or quasi-static WSN network topology (static nodes with static propagation conditions in the network). However, its main drawback can be the low scalability and flexibility since any update in the WSN topology should be directly signaled to the gateway. There is a signaling overhead risk and this first embodiment is not robust in case of a gateway failure.

In a second embodiment, corresponding to a "semi-centralized embodiment", the heterogeneous WSN routing and the concentrator selection is performed by the concentrators of each tier. The centralities are calculated cooperatively by the concentrator node by the means of the Brandes algorithm.

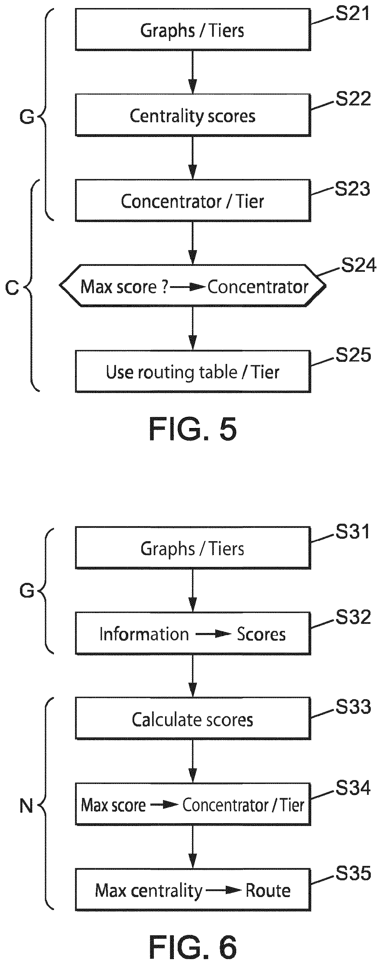

Referring to figure 5, in step S21, the gateway obtains the network graph (issued from the tiers) and calculates in step S22 the centrality scores. In step S23, the gateway calculates the most central node in each tier as being the concentrator to be designated thus. Alternatively, in step S23, concentrators calculate the most central node in their tiers as being the future concentrators to be designated. For example, the gateway can determine initially each concentrator per tier and let then these concentrators determine future concentrators in the following. Alternatively, in step S23, the concentrators can be initially designated randomly and can determine the most central nodes in their cluster as future concentrators.

In steps S24 and S25, each concentrator routes data in its tier and can transmit data to the gateway as well. In this second embodiment, in step S24, each concentrator stores and uses in step S25 a routing table per cluster (or more precisely per tier in this application).

More particularly, in step S24, the centrality scores can be used to define or to update the concentrator nodes of the tiers of the network. The concentrator nodes are defined as the nodes having the highest centrality scores in each tier of the heterogeneous network.

Concentrator nodes can be set and/or updated by the concentrator nodes as follows:

- Initially a concentrator node is chosen randomly in each tier of the network at the gateway,
- Then, the centrality scores of the other nodes of the tier are calculated by Brandes iterations cooperatively by the nodes of the tiers,
- The gateway transmits eventually the predecessor sets to the nodes,
- The concentrator is updated if its centrality is lower than the most central node in the tier.

For example, the current concentrator node can calculate periodically the maximum of centralities of the nodes in the network tier of the WSN. If its current centrality is lower than the maximum of the calculated maximum, the current concentrator triggers a reallocation of the concentrator node to the most central node in the tier.

In another option, each tier of the WSN can be clustered at the gateway and the most central node in each cluster is then determined. The cluster centers determine cooperatively their maximum centrality and the concentrator node of the tier is determined as the most central cluster center.

Then, in step S25, the centrality scores are used to route the packets of each node of the WSN such that the latency of the transmission to the concentrator is minimized. The routing can be performed by the concentrator node (which stores the routing table) and the routes are calculated per tier of the WSN.

The concentrator nodes can obtain paths that minimize the latency of the transmission from each node of the tier to the concentrator. The concentrator nodes are testing first if there is a need for a concentrator reallocation (typically if the concentrator node is the most central node in the tier). Then, the concentrator nodes calculate the routing paths of the nodes in the network.

In another option, the tier of the WSN is clustered by gateway. The gateway determines the most central node in each cluster. The concentrator (the cluster center having the maximum centrality) stores the routing table of the cluster centers. The cluster centers stores local routing tables of each cluster. Thus, the routing in this option is more dynamic and the routing tables are stored in the concentrator and cluster centers. This approach is well adapted to cluster tree routing that is used in ZigBee networks and reduce complexity of the gateway. The main difference with the Zigbee cluster tree routing is the use of the betweeness centrality metric for the definition of the cluster tree structure.

The basic advantage of this embodiment is the increased flexibility and scalability of the WSN with respect to the first embodiment. The coordinator selection and the routing technique are managed by the concentrator node of each tier. Thus, the topology changes are handled locally and efficiently. The centralities are calculated by the Brandes algorithm that may be adapted to the "cluster tree" topology according to this option. Thus, the change in centrality of the node is calculated locally. Moreover, this embodiment is well adapted to the cluster tree topology which is usual in ZigBee and WiSUN (IEEE-802.15.4) networks, where centrality based routing can advantageously be included.

In a third embodiment corresponding to a "distributed" embodiment, the concentrator selection and the routing are performed at nodes of each tier of the WSN. The centrality scores are calculated cooperatively between the nodes by means of the Brandes algorithm based on the predecessor sets information for different nodes of the tier. Each predecessor set is obtained from the gateway.

Figure 6 illustrate this third embodiment where, in step S31, the gateway obtains the graph of the network. In step S32, the gateway transmits information necessary for the distributed calculation of the centrality scores. In step S33, the nodes N calculate the maximum betweeness centrality with the Brandes algorithm. In step S34, nodes are using flat routing based on centrality.

More particularly, in step S34, the centrality scores are used to define or to update the concentrator nodes of the tiers of the network. The concentrator nodes are defined as the nodes having the highest centrality scores in each tier of the heterogeneous network. Concentrator nodes can be defined and/or updated cooperatively by the nodes of each tier of the wireless sensor network. In this case, the nodes exchange their centrality scores in order to calculate cooperatively the maximum of the centrality scores. A node can be programmed to decide to act as a concentrator if its centrality is equal to the calculated maximum centrality of each tier of the WSN.

The following options are possible for a cooperative calculation of the maximum of the centrality scores in this third embodiment.

The maximum of the centralities can be approximated as geometric mean of the centralities such as:

$$m_x = \left( \sum_{i=1}^{N} C_B(i)^P \right)^{1/P}$$

Parameter *P* is set by the gateway to a very high value (for example, *P*=100) and *N* is the number of the nodes in the tier.

The nodes of the tier exchange their centralities as in the "consensus averaging algorithm **Erreur ! Source du renvoi introuvable.".** The average of the *P*-th power of their centralities (

$$m_0 = 1/N \times \sum_{i=1}^{N} C_B(i)^P$$

) can be calculated after the convergence of the consensus averaging. The maximum of the centralities is calculated as $m_x = (Nm_0)^{1/P}$.

Alternatively, each node of the tier receives the centralities of the neighboring nodes and stores the maximum among the received nodes including its own centrality. Each node transmits this maximum and listens to the neighboring nodes. The procedure is iterated until low variation in the stored value by each node is observed and the stored values are close to each other and to the maximum centrality value.

In step S35 of figure 6, then, the centrality scores are used to route the packets of each node of the WSN such that centrality of the routing path is maximized. The nodes of the WSN can store routing tables where each neighbor of the node *i* is characterized by a value of its betweeness centrality in the network. Each node in the WSN routes transmits information packets to the most central node among its one-hop neighbor. This flat routing can optimize the latency of the transmission to the concentrator of each tier with high probability.

The advantage of this third embodiment is that it provides a further increased flexibility with respect to the second embodiment, with added scalability and resistance to topology change. However, its main drawback is that the sensors are more complex and it is necessary to add routing and additional calculation functionalities in each sensor node.

Therefore, the invention provides an efficient, scalable, resilient and low complexity routing and concentrator selection scheme for industrial automation systems using wireless sensor networks, such as electric/gas metering or any sensor data. The key requirement for these applications is the optimization of the data collection latency in the WSN, i.e. the average transmission latency from the nodes of the WSN to the concentrator node. This "real time" requirement is difficult to achieve for a dense and heterogeneous sensor network with sensors of different coverage ranges and transmission powers and using different communication standards. The state-of-the-art routing techniques are rather based on adaptive on demand distance routing (AODV) techniques where WSN is initially flooded by route request messages (RREQ) to identify the network topology and to update the routing tables of the WSN nodes. For ultra-dense and heterogeneous network, the AODV routing is too complex and inefficient. Moreover, AODV algorithm needs network planning tools for the definition of the concentrator node that minimizes the latency of the data collection.

The invention proposes to use techniques inspired from social network analysis for solving the problem of routing and concentrator node selection in ultra-dense and heterogeneous wireless sensor networks. To that end, measurements of "centrality" (like in a social network) are based on radio measurements of the sensor nodes that are collected in each gateway of the WSN for setting the concentrator of a "tier" of the WSN as the most central or "influential" node in that tier. The general steps can be listed as follows:

a) Measurements of sensor nodes are collected at an Internet Of Thing (IOT) gateway where a global relation of the nodes is constructed. This global relation is expressing the communication capabilities of the nodes of the wireless sensor network (or the tier of the WSN they are related to).

b) Centrality scores of the nodes are calculated at the IoT gateway or cooperatively between the sensor nodes. The centrality score for a node *i* is defined as the average contribution of the node to the shortest paths from the nodes of the tier to the concentrator node.

c) The centrality scores are transmitted from the IoT gateway to the concentrator node and/or to the nodes in order to update the concentrators and/or routing in the WSN. The centrality scores may also be calculated cooperatively between the nodes of the tier or a chosen subset of the nodes of the tier.

d) The concentrator is considered as the most central/influential node in the tier of the WSN, i.e. the node with the highest centrality score in the tier.

e) A routing is then based on the centrality scores that is described either as :

- Centralized Routing: paths with maximum cumulative centralities are calculated, starting from each node of the tier towards the concentrator. The basic idea of this routing scheme is to use graph traversal techniques (BFS/Djikstra algorithm) to find the most central path from a node to the concentrator,

- Distributed Routing: local routing rules are used at the node of the WSN that routes data of a node to the most central node in its one-hop neighbor.

Depending on the reactivity of the system to topology change, three embodiments are proposed below:

- A "centralized embodiment": centralities are calculated at the IoT gateway. The selection of the concentrator and the routing is performed at the IoT gateway, i.e. centralized routing and selection of the concentrator node in each tier of the WSN;

- A "semi- centralized embodiment": centralities are calculated and stored at the concentrator node of each tier of the WSN. The concentrator nodes may set any node of the tier as the new concentrator node and the routing paths are calculated and stored in the concentrator node. Alternatively, each tier of the WSN is clustered, and the concentrator node is determined as the most central cluster center of that tier. The main concentrator of the WSN stores the inter-cluster shortest path routing between clusters while the routing within each cluster can be managed by the cluster centers;

- A "fully distributed embodiment": centralities are calculated cooperatively between the nodes as well as the maximum centrality in the tier. A node can decide to perform the task of concentrator if its centrality equals to the maximum centrality in the tier. The routing used in this embodiment is a distributed routing where each node route its data packet to the most central node among its one-hop neighbors.

The main advantage of the routing and concentrator selection techniques that are proposed by the invention may be listed as:

- Reduction of the communication overhead and increased efficiency since the network is not flooded with topology identification messages required during the topology discovery step of the AODV;

- Increased resilience since the handling of the topology variations is possible locally at the concentrator level or at the node level while in AODV there is a need for topology rediscovery if a change in the topology is detected. This increased resilience is essentially proposed for the "semi-centralized" and the "distributed" embodiments;

- Increased scalability since the addition of new nodes in the WSN does not lead to the recalculation of all the centrality scores of the nodes.

The steps shown on figures 3b can correspond to a flow chart of a general algorithm of a computer program that the present invention aims also at. The steps shown on figures 4 to 6 can correspond to flow charts of general algorithms of such a computer program according to three different embodiments of the invention. The instructions of such a computer program can be therefore distributed over the gateway G, and/or the concentrators C and/or the nodes N according to the implemented embodiment.

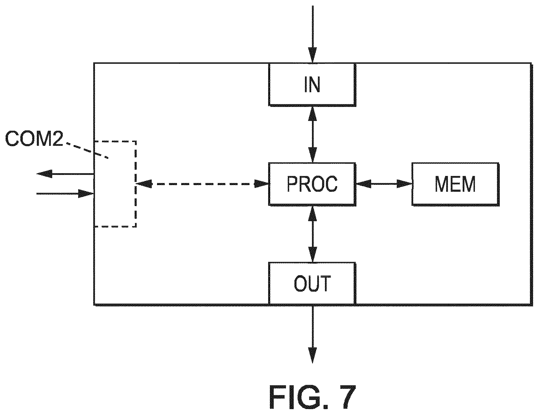

The present invention aims also at a node of a network for performing the method detailed above. As shown in figure 7, that node can include a computer circuit comprising:

- An input interface IN, to receive data from other nodes,

- An output interface OUT, to transmit data to other nodes,

- A processor PROC cooperating with a memory MEM storing at least a part of the instructions of the computer program.

The node shown on figure 7 can act furthermore as a gateway G in the network (between nodes of different tiers) and can include to that end more than one communication interface COM2 (plus the input IN and output OUT interfaces shown in figure 7).

The present invention can be embedded thus in a computer program product (an algorithm of which is described above with reference to figures 3b to 6), which comprises all the features enabling the implementation of the method described herein, and which, when loaded in an information processing system (for example a set of communicating entities), causes the information processing system to carry out the invention. Computer program means or computer program in the present context mean any expression, in any language, code or notation, of a set of instructions intended to cause a system having an information processing capability to perform a particular function either directly or after the conversion to another language. Such a computer program can be stored on a computer or machine readable medium allowing data, instructions, messages or message packets, and other machine readable information to be read from the medium. The computer or machine readable medium may include non-volatile memory, such as ROM, Flash memory, Disk drive memory, DVD or CD-ROM, and other permanent storage. Additionally, a computer or machine readable medium may include, for example, volatile storage such as RAM, buffers, cache memory, and network circuits. Furthermore, the computer or machine readable medium may comprise computer or machine readable information in a transitory state medium such as a network link and/or a network interface, including a wired network or a wireless network, that allow a device to read such computer or machine readable information.

## Claims

1. A method implemented by computer means for defining data routing between IoT devices forming nodes of a network, the method comprising the steps of:

   - for each node of the network, obtaining measurements (S1) of link quality between the node and one or several neighbor nodes of that node, and comparing said measurements to a threshold so as to label said node as a most influent node of the network,
   - determining a graph (S2) representing a hierarchy in said nodes from the most influent nodes, as central nodes, to the less influent nodes, as edge nodes, and defining a data routing (S5) in the network maximizing a betweeness centrality (S3) in the graph.

2. The method of claim 1, wherein, said nodes of the network operating according to different types of operation, said nodes of the network are distributed in at least a first and a second distinct tier, nodes of a same tier having a same type of operation, the nodes of each of said tiers being connected to a gateway between said first and second tiers, and wherein said graph is determined for each of said first and second tiers.

3. The method of claim 2, wherein said gateway:

- calculates a graph for each tier based on said link quality measurements,
- calculates a betweeness centrality score for each node of each graph between the nodes of each network tier,
- determines, stores and uses a table of paths for routing data from one node to another in each tier based on betweeness centrality scores of nodes in that tier such that the sum of the tier nodes betweeness centralities is maximized for each path.

4. The method of claim 3, wherein said gateway designates one concentrator node per tier as having the highest betweeness centrality score among the nodes of its tier.

5. The method of claims 3 or 4, wherein central paths, defined in said table, minimize data collection latency for each tier of the network.

6. The method of claim 2, wherein the gateway determines graphs for all the tiers of the network and calculates betweeness centrality scores for every node in each tier in a first step, and one concentrator node is designated in each tier to route data between nodes of its tier, said concentrator being defined as the most central node in its tier, and wherein, in a second step, said concentrator designates repeatedly the most central node in its tier to become eventually the new concentrator in its tier.

7. The method of claim 6, wherein, in said second step, each current concentrator in a tier designates one next concentrator node to replace the current concentrator in that tier, as having the highest betweeness centrality score among the nodes of that tier.

8. The method of claim 2, wherein the gateway obtains the graph of each tier of the network and transmits graph information to each node of each tier for calculation of betweeness centrality scores performed by each node, and for designating one concentrator node in each tier to route data between nodes of its tier, said concentrator being defined as the most central node in its tier, and wherein nodes of a same tier designate repeatedly the most central node in their tier to become eventually the new concentrator in their tier.

9. The method of claim 8, wherein betweeness centrality scores are used to determine the concentrator nodes of each tier and wherein the nodes exchange their centrality scores in order to calculate cooperatively the maximum of the centrality scores, a node having said maximum of the centrality scores being defined as the concentrator in its tier.

10. The method according to any of claims 6 to 9, wherein each concentrator determines, stores and uses a table of paths for routing data from one node to another in its tier based on betweeness centrality scores of nodes in that tier such that the sum of the tier nodes betweeness centralities is maximized for each path.

11. The method according to any of the precedent claims, wherein a betweeness centrality score is calculated for each current node of the network by:

A) for each one-hop first neighbor of said current node, counting a first number of links, having a measured quality higher than said threshold, that said current node neighbor has with its one-hop first neighbors,
B) counting a second number of links, having a measured quality higher than said threshold, that said current node has with its one-hop first neighbors, weighted for each neighbor by a value corresponding to the first number of that neighbor,
C) Repeating recursively steps A) and B) and summing said first and second numbers to determine betweeness centrality scores for each node of the network as a current node.

12. The method of claim 11, wherein steps A) to C) are performed following a Brandes algorithm type implementation.

13. A computer program product, comprising instructions for performing the method as claimed in any of the precedent claims, when run by a processor.

14. A node of a network comprising a computer circuit performing the method according to any of claims 1 to 12.

15. The node of claim 14, being configured to act as a gateway between at least two tiers of said network.

FIG. 1
(PRIOR ART)

FIG. 2

FIG. 3a

MEASUR —▶ G — S1

Graphs #1, #2, #3 — S2

Calc. centrality scores — S3

Define concentrator nodes — S4

Routing / Centrality — S5

## FIG. 3b

Graphs / Tiers — S11

Centrality scores — S12

Concentrator / Tier — S13

Global routing — S14

Max centrality —▶ Route — S15

G

## FIG. 4

```
        ┌   ┌─────────────────────────┐
        │   │      Graphs / Tiers     │──── S21
        │   └─────────────────────────┘
        │              │
        │              ▼
     G ─┤   ┌─────────────────────────┐
        │   │     Centrality scores   │──── S22
        │   └─────────────────────────┘
        └              │
                       ▼
        ┌   ┌─────────────────────────┐
        │   │    Concentrator / Tier  │──── S23
        │   └─────────────────────────┘
        │              │
        │              ▼
     C ─┤   ⬡ Max score ?──▶Concentrator ⬡──── S24
        │              │
        │              ▼
        │   ┌─────────────────────────┐
        │   │  Use routing table / Tier │──── S25
        └   └─────────────────────────┘
```

# FIG. 5

```
        ┌   ┌─────────────────────────┐
        │   │      Graphs / Tiers     │──── S31
        │   └─────────────────────────┘
     G ─┤              │
        │              ▼
        │   ┌─────────────────────────┐
        │   │  Information ──▶ Scores  │──── S32
        └   └─────────────────────────┘
                       │
                       ▼
        ┌   ┌─────────────────────────┐
        │   │     Calculate scores    │──── S33
        │   └─────────────────────────┘
        │              │
        │              ▼
     N ─┤   ┌─────────────────────────┐
        │   │ Max score ─▶ Concentrator / Tier │──── S34
        │   └─────────────────────────┘
        │              │
        │              ▼
        │   ┌─────────────────────────┐
        │   │  Max centrality ──▶ Route │──── S35
        └   └─────────────────────────┘
```

# FIG. 6

FIG. 7

Europäisches
Patentamt

European
Patent Office

Office européen
des brevets

# EUROPEAN SEARCH REPORT

Application Number

EP 17 30 5861

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EDUARDO M R OLIVEIRA ET AL: "Centrality-based routing for Wireless Sensor Networks", WIRELESS DAYS (WD), 2010 IFIP, IEEE, PISCATAWAY, NJ, USA, 20 October 2010 (2010-10-20), pages 1-5, XP031818062, ISBN: 978-1-4244-9230-5 * abstract; figure 1 * * Section III * * page 4, column 1, paragraph 4 - column 2, paragraph 3 * | 1-15 | INV. H04L12/751 H04W40/24 |
| X | CN 105 550 191 A (UNIV CHENGDU INF TECHNOLOGY; WANG JUAN) 4 May 2016 (2016-05-04) * the whole document * | 1-15 | |
| T | SHLOMI DOLEV ET AL: "Routing betweenness centrality", JOURNAL OF THE ASSOCIATION FOR COMPUTING MACHINERY, ACM, NEW YORK, NY, US, vol. 57, no. 4, 3 May 2010 (2010-05-03), pages 1-27, XP058120162, ISSN: 0004-5411, DOI: 10.1145/1734213.1734219 * the whole document * | 1-15 | TECHNICAL FIELDS SEARCHED (IPC) G06F H04L H04W |

The present search report has been drawn up for all claims

| Place of search | Date of completion of the search | Examiner |
|---|---|---|
| The Hague | 31 October 2017 | Hanigk, Sebastian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 30 5861

This annex lists the patent family members relating to the patent documents cited in the above-mentioned European search report.
The members are as contained in the European Patent Office EDP file on
The European Patent Office is in no way liable for these particulars which are merely given for the purpose of information.

31-10-2017

| Patent document cited in search report | Publication date | Patent family member(s) | Publication date |
|---|---|---|---|
| CN 105550191 A | 04-05-2016 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BRANDES.** A Faster Algorithm for Betweeness Centrality. *J. of Math. Sociology,* 2001, vol. 25 (2), 163-117